# EUROPÄISCHE PATENTSCHRIFT

(11) **EP 1 384 448 B1**
(45) Veröffentlichungstag und Bekanntmachung des Hinweises auf die Patenterteilung: **02.08.2006**
(21) Anmeldenummer: 03014162.6
(22) Anmeldetag: 24.06.2003
(51) Int. Cl.: A61C 13/00, C25D 3/48, C25D 21/10, C25D 21/02

(54) **Vorrichtung zur galvanischen Abscheidung prothetischer, metallischer Dentalformteile**
Apparatus for the electrolytic deposition on metallic prothetic dental elements
Dispositif pour le dépôt galvalnique sur des prothèses dentaires métalliques

(30) Priorität: 26.07.2002 DE 10234285
(43) Veröffentlichungstag der Anmeldung: 28.01.2004
(73) Patentinhaber: Heraeus Kulzer GmbH, 63450 Hanau (DE)
(72) Erfinder: Brämer, Wulf, Dr., 63486 Bruchköbel (DE); Koops, Ullrich, Dr., 64380 Rossdorf (DE); Schmid, Stephan, 63695 Glauburg (DE)
(74) Vertreter: Kühn, Hans-Christian

(56) Entgegenhaltungen:
- EP-A- 0 990 423
- WO-A-92/07977
- DE-A- 3 809 435
- DE-U- 8 911 651
- JP-A- 52 089 536

## Beschreibung

Die Erfindung betrifft eine Vorrichtung zur galvanischen Abscheidung prothetischer, metallischer Dentalformteile, mit einem Becherglas zur Aufnahme eines Elektrolytbades, einem Rührsystem zur Bewegung des Elektrolytbades, einem Heizsystem zur Beheizung des Elektrolytbades, mindestens einer Anode und mindestens einer Kathode sowie einer elektrischen Versorgungseinheit, die mit der mindestens einen Anode und der mindestens einen Kathode verbunden ist. Die Erfindung betrifft weiterhin die Verwendung dieser Vorrichtung sowie ein Verfahren zur Herstellung prothetischer, metallischer Dentalformteile durch galvanische Abscheidung aus einem Elektrolytbad, wobei das Elektrolytbad beheizt und bewegt wird.

Eine derartige Vorrichtung bzw. ein derartiges Verfahren ist aus der DE 198 45 506 A1 bekannt. Das Verfahren, welches auch als Galvanoforming-Verfahren bezeichnet wird, beschreibt die Herstellung prothetischer Formteile für den Dentalbereich mit Hilfe galvanischer Abscheidung von Metall, insbesondere von Edelmetallen und Edelmetalllegierungen. Die hergestellten prothetischen Formteile sind beispielsweise Dentalgerüste, auf die Keramik oder Kunststoff als Verblendung aufgebracht werden kann. Weiterhin sind Formteile herstellbar, die in der Doppelkronen- und Brückentechnik eingesetzt werden bzw. auch solche, die eine direkte Verwendung finden. Als Elektrolytbad für die galvanische Abscheidung des Edelmetalls ist hier insbesondere ein wässriges Goldsulfit-Bad offenbart. Die zur Durchführung des Verfahrens verwendete Apparatur besteht aus einem beheizten Magnetrührer zur Bewegung des Elektrolytbades, einem Temperaturfühler zur Messung der Temperatur des Elektrolytbades, einer Strom-Spannungs-Quelle, einer Elektrolysezelle bestehend aus einem Becherglas mit Abdeckung und einem Rührstab sowie den Anoden, den Kathoden und dem Elektrolytbad. Während des Abscheidevorganges des Edelmetalls wird das Elektrolytbad auf Abscheidetemperaturen von größer als 30 °C, vorzugsweise auf eine Temperatur im Bereich von 50 bis 80 °C, beheizt.

Die DE 38 09 435 A1 offenbart eine Vorrichtung sowie ein Verfahren zur Herstellung einer inneren Krone aus Edelmetall zur galvanischen Abscheidung. Die Vorrichtung setzt sich dabei aus einem Badbehälter mit dem galvanischen Bad, einem Propellerrührer zur Bewegung des Bades, einer Widerstandsheizwendel zur Beheizung des Bades, einer Anode, einer Kathode, einer Hilfselektrode sowie einer Stromquelle zusammen.

Die JP 52-089536 offenbart die Bestrahlung eines Elektrolyten mit Strahlung der Wellenlänge 200 bis 450 nm (UV-Strahlung). Bei dem Elektrolyten handelt es sich dabei um ein Zinnbad, in welchem metallische Zinnpartikel gelöst werden sollen. Die UV-Strahlung bewirkt eine Entfernung der Oxidhaut auf den einzelnen metallischen Zinnpartikeln und verbessert damit das Löseverhalten dieser in dem Zinnbad. Die dabei verwendete Vorrichtung weist einen Glasbehälter auf, in welchem sich das Zinnbad und das metallische Zinnpulver befinden. Dabei wird das Zinnbad durch einen Magnetrührer bewegt. Der UV-Strahler zur Bestrahlung der Suspension befindet sich über der Oberfläche der Suspension.

Die US 4,246,086 offenbart die Herstellung metallischer oder keramischer Schichten durch elektrophoretische oder galvanische Abscheidung zur Bildung von Dentalkronen oder Dentalbrücken. Dabei ist eine Apparatur offenbart, die einen Glas- oder Kunststoffbehälter mit einem Elektrophoresebad oder einem galvanischen Bad aufweist. Das Bad wird dabei durch einen Magnetrührer bewegt.

Des weiteren ist aus der Veröffentlichung "Eine konsequente Weiterentwicklung des Galvanoforming-Verfahrens" der Firma Heraeus Kulzer GmbH & Co. KG ( Sonderdruck aus DENTAL LABOR, Heft 4/1999, Verlag Neuer Merkur, München, Autoren: Dr. Brämer, Dr.Tertsch, Dr. Schuster, Unkelbach, Raupach, Kimmel, Schmid ) ein Galvanoforming-Gerät ( Preciano - System ) sowie das Galvanoforming-Funktionsprinzip bekannt. Das Galvanoforming-Gerät weist ein transparentes Becherglas mit einem Deckel auf, durch welchen die Kathoden geführt sind, an welchen die zu beschichtenden Objekte angeordnet sind. Des weiteren ist durch den Deckel die Anode geführt. Die zu beschichtenden Objekte sind mit einem Silberleitlack versehen und vollständig in ein Elektrolytbad eingetaucht, welches mit einem Magnetrührer bewegt wird. Als Elektrolyt ist dabei ein Goldbad offenbart.

Um einen Dentalformkörper mit ausreichender Schichtdicke durch Galvanoforming zu erreichen, sind vergleichsweise lange Galvanisierzeiten erforderlich. Die gebildeten Formkörper müssen weiterhin einen homogenen Schichtaufbau, eine einheitliche Schichtdicke und eine ausreichende Festigkeit aufweisen. Hohe Qualitätsanforderungen werden auch an die weiteren Eigenschaften der Formteile, wie Porosität, Verschleißfestigkeit, Korrosionsbeständigkeit sowie das ästhetische Aussehen bezüglich des Glanzes und der Oberflächenbeschaffenheit gestellt. Um alle diese Anforderungen zu erfüllen, sind üblicherweise Abscheidezeiten im Bereich vieler Stunden erforderlich. Bei den bekannten Galvanoforming-Apparaturen erfolgt die Beheizung des Elektrolytbades über eine Heizplatte, die in direktem Kontakt zum Elektrolytbehälter angeordnet ist. Die Erwärmung des Elektrolyten erfolgt demnach über Wärmeleitung und ist dementsprechend langsam.

Es ist nun das Problem der Erfindung, eine Vorrichtung und ein Verfahren zur Herstellung prothetischer, metallischer Dentalformteile durch galvanische Abscheidung bereit zu stellen, die zu einer Verkürzung der Abscheidezeiten führen.

Das Problem wird für die Vorrichtung dadurch gelöst, dass ein Heizsystem verwendet wird, das aus mindestens einem Infrarotstrahler gebildet ist, dessen Hauptanteil der Emission in einem Wellenlängenbereich von 0,5 µm bis 1000 µm liegt.
Eine Erwärmung des Elektrolytbades durch Wärmestrahlung ist signifikant schneller als eine Erwärmung durch Wärmeleitung. Dabei können durch Verwendung von Wärmestrahlung um den Faktor 3 bis 5 kürzere Erwärmungszeiten erreicht werden. Dies ist insbesondere dann wichtig, wenn die Abscheidezeiten für ein Dentalformteil verhältnismäßig kurz sind.

Dabei hat es sich insbesondere bewährt, wenn der mindestens eine Infrarotstrahler neben dem Becherglas beziehungsweise parallel zur Wandung des Becherglases angeordnet ist. Weiterhin ist es möglich, den mindestens einen Infrarotstrahler oberhalb des Becherglases oder über dem Becherglas anzuordnen. Dabei muss allerdings darauf geachtet werden, dass die Befestigung der Anode(n) und Kathode(n) im Becherglas einen Zutritt der Strahlung zum Elektrolyten gestattet. Sind die Anode(n) und die Kathode(n) an einem Deckel befestigt, welcher das Becherglas verschließt, so kann der mindestens eine Infrarotstrahler in diesem Deckel integriert sein oder aber oberhalb des Deckels angeordnet sein, wenn dieser für die Wärmestrahlung transparent ist.

Weiterhin hat es sich bewährt, den mindestens einen Infrarotstrahler unterhalb des Becherglases anzuordnen. Dabei kann der Infrarotstrahler mit einem Magnetrührwerk kombiniert sein, so dass eine Rührbewegung im Elektrolytbad möglich ist.

Weiterhin ist es möglich, den mindestens einen Infrarotstrahler im Becherglas anzuordnen oder in einer Wandung des Becherglases zu integrieren. Dabei kann der Infrarotstrahler auch ganz oder teilweise in das Elektrolytbad eintauchen.

Eine weitere mögliche Ausgestaltung der Vorrichtung ist es, wenn der mindestens eine Infrarotstrahler den maximalen Durchmesser des Becherglases umgibt. Dabei kann das Becherglas beispielsweise inmitten eines wendelförmigen Infrarotstrahlers platziert sein. Aber auch eine ringförmige Anordnung von Infrarotstrahlern mit rohrförmigem Querschnitt, welche parallel oder tangential zur Becherwandung ausgerichtet sind, ist denkbar.

Selbstverständlich ist es auch möglich, die oben aufgeführten Möglichkeiten zur Platzierung des mindestens einen Infrarotstrahlers miteinander in jeglicher Weise zu kombinieren. Es muss lediglich darauf geachtet werden, dass Materialien, die sich im Strahlengang zwischen dem mindestens einen Infrarotstrahler und dem Elektrolytbad befinden, eine Erwärmung des Elektrolytbades zulassen.

Besonders bewährt hat es sich, wenn der Hauptanteil der Emission des mindestens einen Infrarotstrahlers in einem Wellenlängenbereich von 0,5 µm bis 4 µm liegt.

Als Becherglasmaterial hat sich beispielsweise Quarzglas bewährt. Hier ist allerdings darauf zu achten, dass Quarzglas üblicherweise für Wellenlängen von größer als 4 µm nicht transparent ist und dies bei der Auswahl des Infrarotstrahlers und/oder seiner Anordnung berücksichtigt werden muss.

Im Hinblick auf die Herstellungskosten der Vorrichtung hat es sich bewährt, wenn der mindestens eine Infrarotstrahler zur Erzeugung einer polychromatischen Strahlung geeignet ist. Allerdings ist es auch möglich, einen Infrarotstrahler zu verwenden, der zur Erzeugung einer monochromatischen Strahlung geeignet ist.

Weiterhin hat es sich bewährt, als Rührsystem für das Elektrolytbad einen Magnetrührer einzusetzen. Allerdings können auch andere Rührsysteme wie zum Beispiel motorgetriebene Propellerrührer oder dergleichen eingesetzt werden.

Zur Temperierung des Elektrolytbades hat es sich weiterhin bewährt, einen Temperaturfühler vorzusehen. Dabei hat es sich bewährt, den Temperaturfühler im Elektrolytbad anzuordnen.

Vorteilhafterweise werden die Anode(n) und die Kathode(n) an einem Deckel befestigt, der zum Verschließen des Becherglases geeignet ist. Damit ist eine schnelle und unkomplizierte Platzierung der zu beschichtenden Objekte im Elektrolytbad möglich.

Die Verwendung einer solchen Vorrichtung zur galvanischen Abscheidung dreidimensionaler prothetischer metallischer Dentalformteile ist ideal.

Das Problem wird für das Verfahren dadurch gelöst, dass das Elektrolytbad mit mindestens einem Infrarotstrahler beheizt wird, dessen Hauptanteil der Emission in einem Wellenlängenbereich von 0,5 µm bis 1000 µm liegt.
Eine Erwärmung des Elektrolytbades durch Wärmestrahlung ist signifikant schneller als eine Erwärmung durch Wärmeleitung. Dabei können durch Verwendung von Wärmestrahlung um den Faktor 3 bis 5 kürzere Erwärmungszeiten erreicht werden. Dies ist insbesondere dann wichtig, wenn die Abscheidezeiten für ein Dentalformteil verhältnismäßig kurz sind.

Besonders bevorzugt ist dabei, wenn der Hauptanteil der Emission in einem Wellenlängenbereich von 0,5 µm bis 4 µm liegt.

Bewährt hat es sich dabei, wenn der mindestens eine Infrarotstrahler eine polychromatische Strahlung aussendet. Allerdings ist auch ein Infrarotstrahler verwendbar, der monochromatische Strahlung aussendet.

Als Elektrolytbad wird vorzugsweise ein Edelmetallbad eingesetzt. Dabei kommen insbesondere wässrige Goldbäder zum Einsatz. Aber auch Bäder zur Abscheidung von Edelmetall-Legierungen sind bevorzugt.

Die nachfolgenden Figurendarstellungen 1 bis 5 sollen die Erfindung beispielhaft erläutern. So zeigt:
- Fig. 1: den schematischen Aufbau einer bekannten Vorrichtung zur Durchführung des Galvanoforming-Verfahrens
- Fig. 2: den schematischen Aufbau einer erfindungsgemäßen Vorrichtung, bei welcher der Infrarotstrahler oberhalb des Becherglases angeordnet ist,
- Fig. 3: den schematischen Aufbau einer erfindungsgemäßen Vorrichtung, bei welcher der Infrarotstrahler unterhalb des Becherglases angeordnet ist,
- Fig. 4: den schematischen Aufbau einer erfindungsgemäßen Vorrichtung, bei welcher der Infrarotstrahler neben dem Becherglas angeordnet ist, und
- Fig. 5: den schematischen Aufbau einer erfindungsgemäßen Vorrichtung, bei welcher der Infrarotstrahler in das Elektrolytbad eingetaucht ist.

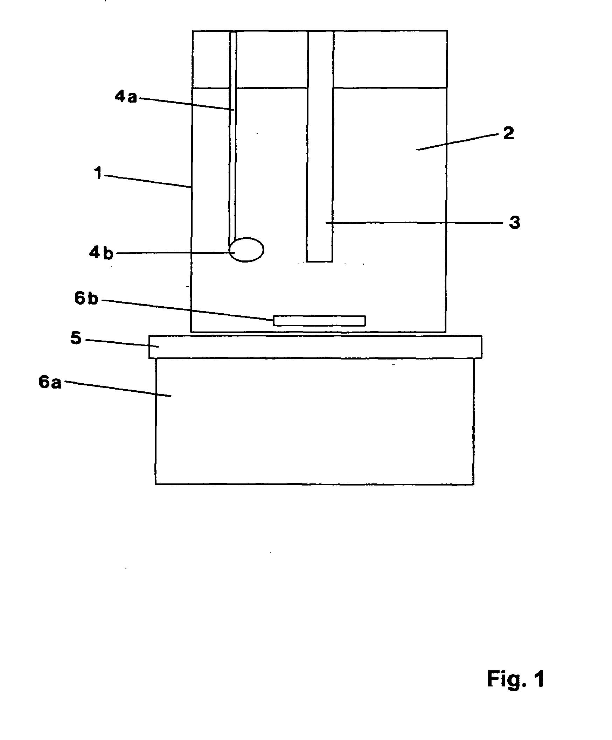

Fig. 1 zeigt den schematischen Aufbau einer bekannten Vorrichtung zur Durchführung des Galvanoforming-Verfahrens mit einem Becherglas 1, welches mit einem Elektrolytbad 2 gefüllt ist. im Elektrolytbad 2 befindet sich eine Anode 3 und eine Kathode 4a, an welcher ein Formteil 4b angeordnet ist, auf dessen Oberfläche das Metall aus dem Elektrolytbad 2 abgeschieden werden soll. Das Becherglas 1 befindet sich zur Erwärmung des Elektrolytbades 2 auf einer widerstandsbeheizten Wärmeplatte 5. Weiterhin ist ein Magnetrührer 6a vorgesehen, über welchen ein Magnetrührstab 6b im Elektrolytbad 2 bewegt wird und eine intensiven Bewegung des Elektrolytbades 2 bewirkt. Die elektrische Kontaktierung der Anode 3 und der Kathode 4a, 4b ist nicht gesondert dargestellt.

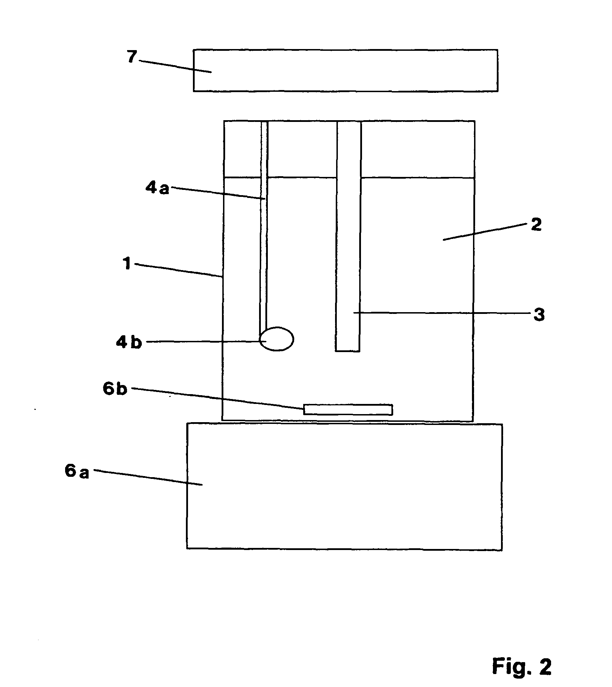

Fig. 2 zeigt beispielhaft den schematischen Aufbau einer erfindungsgemäßen Vorrichtung, bei welcher ein Infrarotstrahler 7 oberhalb des Becherglases 1 angeordnet ist.

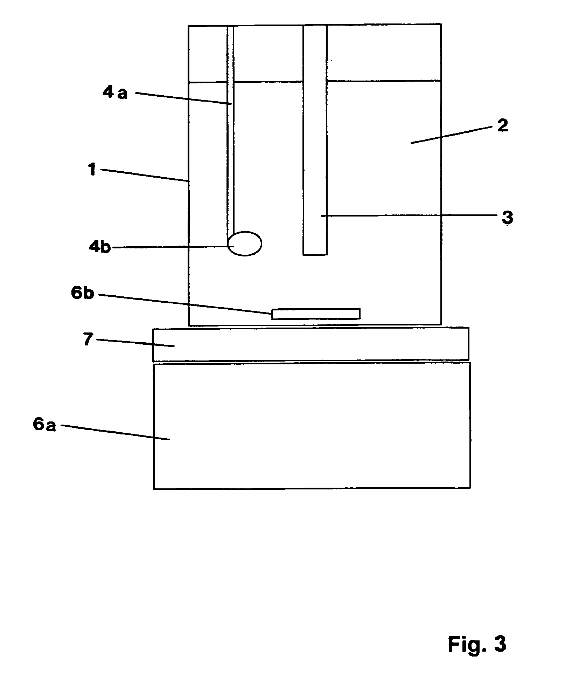

Fig. 3 zeigt beispielhaft den schematischen Aufbau einer erfindungsgemäßen Vorrichtung, bei welcher ein Infrarotstrahler 7unterhalb des Becherglases 1 angeordnet ist.

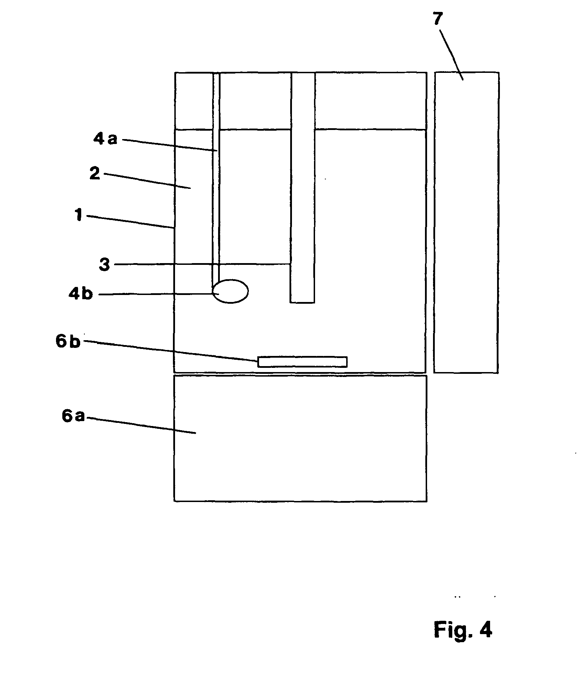

Fig. 4 zeigt beispielhaft den schematischen Aufbau einer erfindungsgemäßen Vorrichtung, bei welcher ein Infrarotstrahler 7 neben dem Becherglas 1 angeordnet ist.

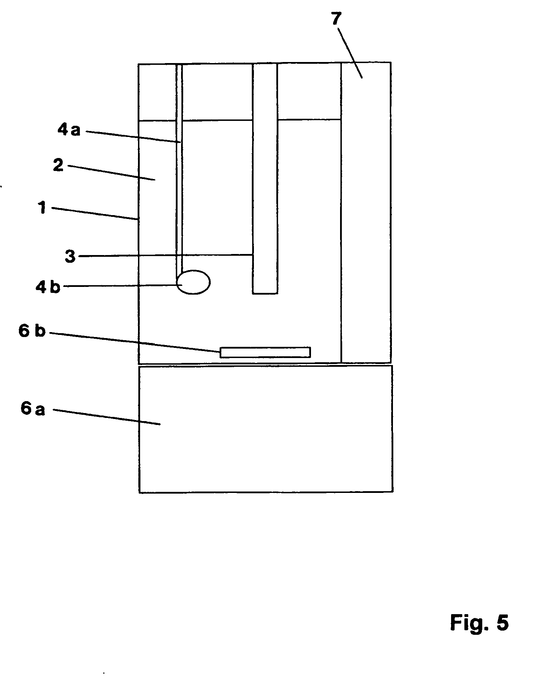

Fig. 5 zeigt beispielhaft den schematischen Aufbau einer erfindungsgemäßen Vorrichtung, bei welcher ein Infrarotstrahler 7 in das Elektrolytbad 2 eingetaucht ist.

Es wird ausdrücklich hinzugefügt, dass auch andere Anordnungen eines oder mehrerer Infrarotstrahler zur Beheizung des Elektrolytbades 2 geeignet sind und daher vom Erfindungsgedanken umfasst sind.

## Patentansprüche

1. Vorrichtung zur galvanischen Abscheidung prothetischer, metallischer Dentalformteile, mit:
- einem Becherglas zur Aufnahme eines Elektrolytbades,
- einem Rührsystem zur Bewegung des Elektrolytbades,
- einem Heizsystem zur Beheizung des Elektrolytbades,
- mindestens einer Anode und mindestens einer Kathode, und
- einer elektrischen Versorgungseinheit, die mit der mindestens einen Anode und der mindestens einen Kathode verbunden ist, **dadurch gekennzeichnet, dass**
das Heizsystem aus mindestens einem Infrarotstrahler gebildet ist, dessen Hauptanteil der Emission in einem Wellenlängenbereich von 0,5 µm bis 1000 µm liegt.

2. Vorrichtung nach Anspruch 1, **dadurch gekennzeichnet, dass** der mindestens eine Infrarotstrahler
a) neben dem Becherglas und/oder
b) oberhalb des Becherglases und/oder
c) unterhalb des Becherglases und/oder
d) in dem Becherglas und/oder
e) den maximalen Durchmesser des Becherglases umgebend angeordnet ist und dass mindestens bei Auftreten von einem der Fälle a) oder c) oder e) das Becherglas aus einem Material gebildet ist, das zumindest für den Hauptanteil der Emission des mindestens einen Infrarotstrahlers durchlässig ist.

3. Vorrichtung nach einem der Ansprüche 1 bis 2, **dadurch gekennzeichnet, dass** der Hauptanteil der Emission des mindestens einen Infrarotstrahlers in einem Wellenlängenbereich von 0,5 µm bis 4 µm liegt.

4. Vorrichtung nach einem der Ansprüche 1 bis 3, **dadurch gekennzeichnet, dass** das Becherglas aus Quarzglas gebildet ist.

5. Vorrichtung nach einem der Ansprüche 1 bis 4, **dadurch gekennzeichnet, dass** der mindestens eine Infrarotstrahler zur Erzeugung einer polychromatischen Strahlung geeignet ist.

6. Vorrichtung nach einem der Ansprüche 1 bis 4, **dadurch gekennzeichnet, dass** der mindestens eine Infrarotstrahler zur Erzeugung einer monochromatischen Strahlung geeignet ist.

7. Vorrichtung nach einem der Ansprüche 1 bis 6, **dadurch gekennzeichnet, dass** das Rührsystem ein Magnetrührsystem ist.

8. Vorrichtung nach einem der Ansprüche 1 bis 7, **dadurch gekennzeichnet, dass** ein Temperaturfühler zum Messen der Temperatur des Elektrolytbades vorhanden ist.

9. Vorrichtung nach einem der Ansprüche 1 bis 8, **dadurch gekennzeichnet, dass** die Anode(n) und die Kathode(n) an einem Deckel befestigt sind, der zum Verschließen des Becherglases geeignet ist.

10. Verwendung einer Vorrichtung nach einem der Ansprüche 1 bis 9 zur galvanischen Abscheidung dreidimensionaler prothetischer metallischer Dentalformteile.

11. Verfahren zur Herstellung prothetischer, metallischer Dentalformteile durch galvanische Abscheidung aus einem Elektrolytbad, wobei das Elektrolytbad beheizt und bewegt wird, **dadurch gekennzeichnet, dass** das Elektrolytbad mit mindestens einem Infrarotstrahler beheizt wird, dessen Hauptanteil der Emission in einem Wellenlängenbereich von 0,5 µm bis 1000 µm liegt.

12. Verfahren nach Anspruch 11, **dadurch gekennzeichnet, das** Elektrolytbad mit mindestens einem Infrarotstrahler beheizt wird, dessen Hauptanteil der Emission in einem Wellenlängenbereich von 0,5 µm bis 4 µm liegt.

13. Verfahren nach einem der Ansprüche 11 bis 12, **dadurch gekennzeichnet, dass** der Infrarotstrahler eine polychromatische Strahlung aussendet.

14. Verfahren nach einem der Ansprüche 11 bis 12, **dadurch gekennzeichnet, dass** der Infrarotstrahler eine monochromatische Strahlung aussendet.

15. Verfahren nach einem der Ansprüche 11 bis 14, **dadurch gekennzeichnet, dass** als Elektrolytbad ein Edelmetallbad verwendet wird.

16. Verfahren nach Anspruch 15, **dadurch gekennzeichnet, dass** als Edelmetallbad ein Goldbad verwendet wird.

## Claims

1. Device for electrodepositing prosthetic, metallic, moulded dental components, comprising:
- a glass beaker for accommodating an electrolyte bath,
- a stirring system for moving the electrolyte bath,
- a heating system for heating the electrolyte bath,
- at least one anode and at least one cathode, and
- an electrical supply unit, which is connected to the at least one anode and the at least one cathode, **characterised in that** the heating system is formed from at least one infrared radiator, the main proportion of the emission of which is in a wavelength range of 0.5 µm to 1000 µm.

2. Device according to claim 1, **characterised in that** the at least one infrared radiator is arranged
a) next to the glass beaker and/or
b) above the glass beaker and/or
c) below the glass beaker and/or
d) in the glass beaker and/or
e) in a manner in which it surrounds the maximum diameter of the glass beaker and **in that** at least with the occurrence of one of the cases a) or c) or e), the glass beaker is formed from a material, that is translucent at least to the main proportion of the emission of the at least one infrared radiator.

3. Device according to either claims 1 or 2, **characterised in that** the main proportion of the emission of the at least one infrared radiator is in a wavelength range of 0.5 µm to 4 µm.

4. Device according to any one of claims 1 to 3, **characterised in that** the glass beaker is formed from quartz glass.

5. Device according to any one of claims 1 to 4, **characterised in that** the at least one infrared radiator is suitable for generating polychromatic radiation.

6. Device according to any one of claims 1 to 4, **characterised in that** the at least one infrared radiator is suitable for generating monochromatic radiation.

7. Device according to any one of claims 1 to 6, **characterised in that** the stirring system is a magnetic stirring system.

8. Device according to any one of claims 1 to 7, **characterised in that** a temperature sensor is present to measure the temperature of the electrolyte bath.

9. Device according to any one of claims 1 to 8, **characterised in that** the anode(s) and the cathode(s) are fastened to a lid, which is suitable for sealing the glass beaker.

10. Use of a device according to any one of claims 1 to 9, for electrodepositing three-dimensional, prosthetic, metallic, moulded dental components.

11. Method for producing prosthetic, metallic, moulded dental components by electrodeposition from an electrolyte bath, wherein the electrolyte bath is heated and moved, **characterised in that** the electrolyte bath is heated with at least one infrared radiator, the main proportion of the omission of which is in a wavelength range of 0.5 µm to 1000 µm.

12. Method according to claim 11, **characterised in that** the electrolyte bath is heated with at least one infrared radiator, the main emission proportion of which is in a wavelength range of 0.5 µm to 4 µm.

13. Method according to either of claims 11 to 12, **characterised in that** the infrared radiator emits polychromatic radiation.

14. Method according to either of claims 11 to 12, **characterised in that** the infrared radiator emits monochromatic radiation.

15. Method according to any one of claims 11 to 14, **characterised in that** a precious metal bath is used as the electrolyte bath.

16. Method according to claim 15, **characterised in that** a gold bath is used as the precious metal bath.

## Revendications

1. Dispositif de dépôt électrolytique pour prothèses dentaires métalliques, comportant :
- un becher destiné à recevoir l'électrolyte,
- un système de brassage destiné à mettre en mouvement l'électrolyte,
- un système de chauffage destiné à chauffer l'électrolyte,
- au moins une anode et au moins une cathode, et
- une unité d'alimentation électrique, qui est reliée à ladite au moins une anode et à ladite au moins une cathode,
**caractérisé en ce que** le système de chauffage est formé par au moins un radiateur à rayons infrarouges, dont la part principale de l'émission se situe dans le domaine de longueurs d'ondes de 0,5 µm à 1 000 µm.

2. Dispositif selon la revendication 1, **caractérisé en ce que** ledit au moins un radiateur à rayons infrarouges est agencé
a) à côté du becher et/ou
b) au-dessus du becher et/ou
c) en dessous du becher et/ou
d) dans le becher et/ou
e) en entourant le diamètre maximum du becher
et **en ce que**, au moins en présence de l'un des cas a) ou c) ou e), le becher est réalisé dans un matériau qui laisse passer au moins la part principale de l'émission dudit au moins un radiateur à rayons infrarouges.

3. Dispositif selon l'une quelconque des revendications 1 à 2, **caractérisé en ce que** la part principale de l'émission dudit au moins un radiateur à rayons infrarouges se situe dans un domaine de longueurs d'ondes de 0,5 µm à 4 µm.

4. Dispositif selon l'une quelconque des revendications 1 à 3, **caractérisé en ce que** le becher est réalisé en verre de silice.

5. Dispositif selon l'une quelconque des revendications 1 à 4, **caractérisé en ce que** ledit au moins un radiateur à rayons infrarouges est apte à générer un rayonnement polychromatique.

6. Dispositif selon l'une quelconque des revendications 1 à 4, **caractérisé en ce que** ledit au moins un radiateur à rayons infrarouges est apte à générer un rayonnement monochromatique.

7. Dispositif selon l'une quelconque des revendications 1 à 6, **caractérisé en ce que** le système de brassage est un système de brassage magnétique.

8. Dispositif selon l'une quelconque des revendications 1 à 7, **caractérisé en ce qu'**il est prévu un capteur de température destiné à mesurer la température de l'électrolyte.

9. Dispositif selon l'une quelconque des revendications 1 à 8, **caractérisé en ce que** la ou les anodes et la ou les cathodes sont fixées à un couvercle qui est destiné à fermer le becher.

10. Utilisation d'un dispositif selon l'une quelconque des revendications 1 à 9 pour le dépôt électrolytique de prothèses dentaires métalliques tridimensionnelles.

11. Procédé de réalisation de prothèses dentaires métalliques par dépôt électrolytique dans un électrolyte, l'électrolyte étant chauffé et mis en mouvement, **caractérisé en ce que** l'électrolyte est chauffé par au moins un radiateur à rayons infrarouges, dont la part principale de l'émission se situe dans le domaine de longueurs d'ondes de 0,5 µm à 1 000 µm.

12. Procédé selon la revendication 11, **caractérisé en ce que** l'électrolyte est chauffé par au moins un radiateur à rayons infrarouges dont la part principale de l'émission se situe dans un domaine de longueurs d'ondes de 0,5 µm à 4 µm.

13. Procédé selon l'une quelconque des revendications 11 à 12, **caractérisé en ce que** le radiateur à rayons infrarouges émet un rayonnement polychromatique.

14. Procédé selon l'une quelconque des revendications 11 à 12, **caractérisé en ce que** le radiateur à rayons infrarouges émet un rayonnement monochromatique.

15. Procédé selon l'une quelconque des revendications 11 à 14, **caractérisé en ce que** l'électrolyte utilisé est un bain de métal précieux.

16. Procédé selon la revendication 15, **caractérisé en ce que** le bain de métal précieux utilisé est un bain d'or.
